# EUROPEAN PATENT APPLICATION

(11) **EP 2 317 510 A1**
(43) Date of publication of application: **04.05.2011**
(21) Application number: 10163633.0
(22) Date of filing: 21.05.2010
(51) Int. Cl.: G11B 5/64, G11B 5/84

(54) **Single-layered ferromagnetic recording film with perpendicular magnetic anisotropy**

(30) Priority: 03.11.2009 TW 098137204
(71) Applicant: Chen, Sheng-Chi, Taipei City 104 (TW); Chang, Ching-Ray, Taipei City 106 (TW)
(72) Inventor: Chen, Sheng-Chi, 104, Taipei City (TW); Chang, Ching-Ray, 106, Taipei City (TW); Shen, Chih-Lung, Taipei 10617 (TW); Lin, Ger-Pin, 10617, Taipei (TW); Kuo, Po-Cheng, 10617, Taipei (TW); Sun, Ta-Huang, 24301, Taipei (TW); Kuo, Tsung-Yen, 24301, Taiwan (TW)
(74) Representative: Liedtke, Markus

(57) **Abstract**

The present invention discloses a single-layered recording film with perpendicular magnetic anisotropy. The single-layered recording film includes a substrate and a ferromagnetic layer. The ferromagnetic layer is formed on the substrate and annealed by a rapid thermal annealing process. After annealing, the average grain size of the single-layered recording film is close to the film thickness of ferromagnetic layer, which is beneficial to achieve a single-layered recording film with perpendicular magnetic anisotropy.

## Description

### FIELD OF THE INVENTION

The present invention relates to a ferromagnetic recording film with perpendicular magnetic anisotropy, and more particularly to a single-layered ferromagnetic recording film with perpendicular magnetic anisotropy.

### BACKGROUND OF THE INVENTION

The recording density of the magnetic recording medium is inversely proportional to the size of the magnetic particle. The smaller the size of the magnetic particle is, the higher the recording density of the magnetic recording film is. According to the Stoner-Wohlfarth model, the minimum thermal stable grain size (Dp) of a magnetic recording medium with a life of ten years is (60 K_{B}T/Kᵤ)^{1/3}, wherein Kᵤ is the magnetocrystalline anisotropy constant, K_{B} is the Boltzmann constant and T is the absolute temperature. Currently, the material of the most commonly used recording medium for the hard disk is the CoCrPtM alloy film (M=B, Ni, Ta or W), their Ku are about 2x10⁶ erg/cm³. Therefore, when the size of the magnetic particle of the CoCrPtM alloy film is smaller than 10 nm, the thermal stability thereof will be deteriorated.

L1₀ FePt film is the most promising candidate for application in magnetic recording media to increase the recording density beyond 1 Tb/in², because its high magnetocrystalline anisotropy constant (Ku) of 7 ×10⁷ erg/cm³ could delay the onset of the superparamagnetic limit to reduce remarkably the minimal stable grain size to 3 nm. Hence, the FePt alloy film is promising to replace the current CoCrPt alloy film to become the mainstream material of the ultrahigh density magnetic recording medium in the next generation. The perpendicular magnetic recording has a narrow transition region between recording bits, which leads to a higher recording density than that of longitudinal recording. However, the FePt films deposited at ambient temperature normally has (111) preferred orientation and inclines to in-plane magnetic anisotropy. In order to use FePt films as perpendicular magnetic recording media, epitaxial growth (001) texture of FePt film onto MgO, Pt/Cr, CrRu underlayer had been widely studied. But these multilayer films result in the higher cost and undesirable interdiffusions between the FePt magnetic layer and underlayers.

In order to overcome the drawbacks in the prior art, a single-layered ferromagnetic recording film with perpendicular magnetic anisotropy is provided. The particular design in the present invention not only solves the problems described above, but also is easy to be implemented. Thus, the present invention has the utility for the industry.

### SUMMARY OF THE INVENTION

In accordance with one aspect of the present invention, a single-layered ferromagnetic recording film with perpendicular magnetic anisotropy is provided. The single-layered ferromagnetic recording film includes a substrate; and a ferromagnetic layer formed on the substrate; wherein an average grain size of ferromagnetic layer is close to a film thickness of the ferromagnetic layer after performing a rapid thermal annealing process so as to obtain the single-layered ferromagnetic recording film with perpendicular magnetic anisotropy.

Preferably, the rapid thermal annealing process is performed for the ferromagnetic layer at a temperature of 700 °C for 180 seconds with a heating ramp rate of 100 °C/sec.

Preferably, the rapid thermal annealing process is performed under a protection gas of argon (Ar).

Preferably, the substrate is one of a glass substrate and a silicon substrate.

Preferably, the ferromagnetic layer is made of a Fe-based alloy.

Preferably, the Fe-based alloy is a FePt alloy.

Preferably, the ferromagnetic layer is formed on the substrate by a magnetron sputtering.

Preferably, a film thickness of the ferromagnetic layer is 10 nm.

Preferably, an out-of-plane coercivity of the single-layered ferromagnetic recording film is larger than 6000 Oe.

Preferably, a saturation magnetization of the single-layered ferromagnetic recording film is larger than 450 emu/cm³.

Preferably, an out-of-plane squareness of the single-layered ferromagnetic recording film is larger than 0.75.

Preferably, the average grain size of ferromagnetic layer is below 10 nm.

Preferably, a ratio of the average grain size to the film thickness of the ferromagnetic layer is close to 1.

Preferably, the single-layered ferromagnetic recording film has isolated magnetic domains with each other.

The above objects and advantages of the present invention will become more readily apparent to those ordinarily skilled in the art after reviewing the following detailed descriptions and accompanying drawings, in which:

### BRIEF DESCRIPTION OF THE DRAWINGS

Fig. 1 shows the structure of the single-layered ferromagnetic recording film according to a preferred embodiment of the present invention;

Figs. 2A-2D show the hysteresis curves of the single-layered ferromagnetic recording films measured by vibrating sample magnetometer (VSM) of the present invention and the comparative examples after annealing;

Figs. 3A-3D show the saturated hysteresis curves of the single-layered ferromagnetic recording films measured by superconducting quantum interference device (SQUID) of the present invention and the comparative examples after annealing;

Fig. 4 shows the relationship between the coercivity and the film thickness of the FePt alloy films of the present invention and the comparative examples after annealing;

Fig. 5 shows the relationship between the squareness and the film thickness of the FePt alloy films of the present invention and the comparative examples after annealing;

Fig. 6 shows the X-ray diffractometer (XRD) patterns of the FePt alloy films of (a) the present invention and (b)-(d) the comparative examples after annealing;

Fig. 7 shows the relationships between the average grain size, the ratio of the average grain size to the film thickness and the film thickness of the FePt alloy films of the present invention and the comparative examples after annealing;

Figs. 8A-8D show the magnetic force microscope (MFM) images of the FePt alloy films of the present invention and the comparative examples after annealing.

### DETAILED DESCRIPTION OF THE PREFERRED EMBODIMENT

The present invention will now be described more specifically with reference to the following embodiments. It is to be noted that the following descriptions of preferred embodiments of this invention are presented herein for the purposes of illustration and description only; it is not intended to be exhaustive or to be limited to the precise form disclosed.

The present invention provides a single-layered ferromagnetic recording film with perpendicular magnetic anisotropy. The single-layered ferromagnetic recording film includes a substrate and a ferromagnetic layer. The substrate is a glass substrate or a silicon substrate, and the ferromagnetic layer is formed on the substrate by direct current magnetron sputtering. The ferromagnetic layer is a Fe-based alloy, preferably a 10 nm FePt alloy. A rapid thermal annealing process is performed for the as-deposited FePt alloy film at a temperature of 700 °C for 180 seconds with a heating ramp rate of 100°C/sec, wherein the rapid thermal annealing process is performed under the protection gas of argon (Ar). The single-layered ferromagnetic recording film after performing the rapid thermal annealing process has an out-of-plane coercivity (HcI) larger than 6000 Oe and the isolated magnetic domains with each other, which reveals a significant potential as the perpendicular magnetic recording media for ultra high-density recording.

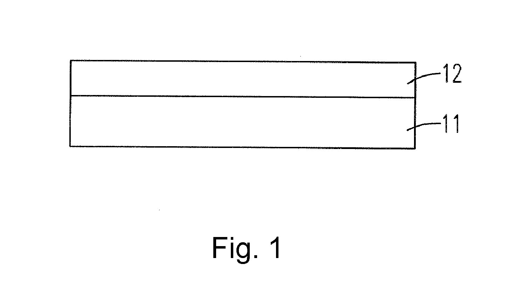

Please refer to Fig. 1, which shows the structure of the single-layered ferromagnetic recording film according to a preferred embodiment of the present invention. According to Fig. 1, the single-layered ferromagnetic recording film 1 of the present invention includes a substrate 11 and a ferromagnetic layer 12. The substrate 11 is made of glass or silicon, and the ferromagnetic layer 12 is formed on the substrate 11 by direct current magnetron sputtering. The material of the ferromagnetic layer 12 is selected from Fe-based alloys, preferably a FePt alloy with a film thickness of 10 nm. The content of Fe in the FePt alloy is 40-60 at%, preferably Fe₅₀Pt₅₀.

As seen in Fig. 1, the single-layered ferromagnetic recording film 1 with perpendicular magnetic anisotropy of the present invention includes a silicon substrate 11 and a 10 nm FePt ferromagnetic layer 12. The sputtering power for the 10 nm FePt ferromagnetic layer 12 is controlled at 50 watt for Fe and 10 watt for Pt. The silicon substrate 11 is at ambient temperature. The Ar pressure in the sputtering chamber is fixed at 10 mTorr, and the rotation rate of the silicon substrate 11 is fixed at 10 rpm. The as-deposited film is annealed in a rapid thermal annealing furnace with the protection gas of Ar at the temperature of 700 °C for 180 seconds with the heating ramp rate of 100 °C/sec and then cooled, so that an ordering L1₀ FePt hard phase having a face-centered tetragonal crystal structure with a high magnetocrystalline anisotropy constant is generated, thereby obtaining a high performance magnetic recording alloy film.

The magnetic properties of the FePt alloy film of the present invention is measured by the vibrating sample magnetometer (VSM) and the superconducting quantum interference device (SQUID), the crystal structure thereof is identified by Cu-Kα of the X-ray diffractometer (XRD), and the distribution of magnetic domains is observed by the magnetic force microscope (MFM).

Embodiment

The as-deposited 10 nm FePt alloy film is annealed in a rapid thermal annealing furnace with the protection gas of Ar at 700 °C for 180 seconds with the heating ramp rate of 100 °C/sec and then cooled.

Comparative example 1

The as-deposited 5 nm FePt alloy film is annealed in a rapid thermal annealing furnace with the protection gas of Ar at 700 °C for 180 seconds with the heating ramp rate of 100 °C/sec and then cooled.

Comparative example 2

The as-deposited 20 nm FePt alloy film is annealed in a rapid thermal annealing furnace with the protection gas of Ar at 700 °C for 180 seconds with the heating ramp rate of 100 °C/sec and then cooled.

Comparative example 3

The as-deposited 40 nm FePt alloy film is annealed in a rapid thermal annealing furnace with the protection gas of Ar at 700 °C for 180 second with the heating ramp rate of 100 °C/sec and then cooled.

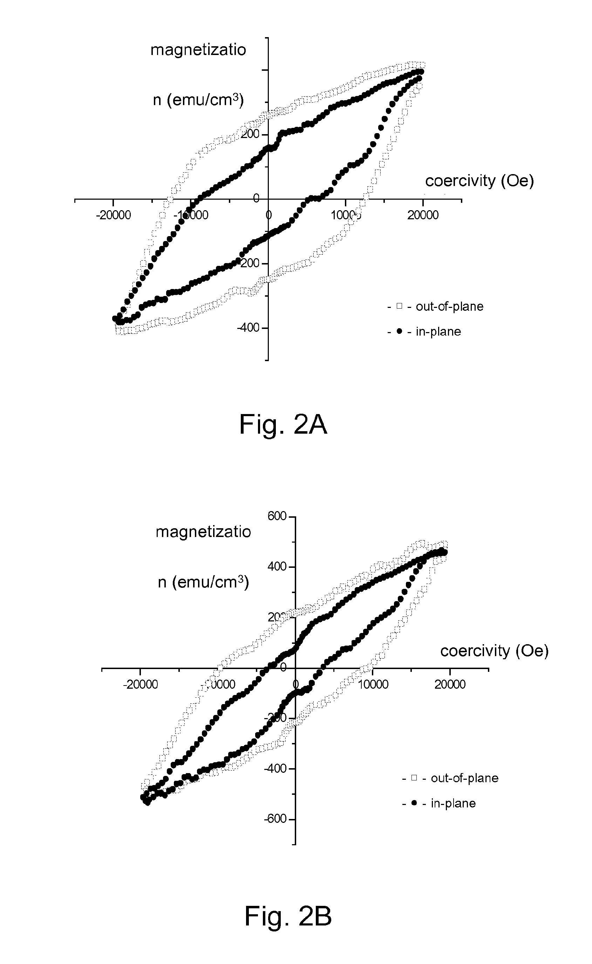

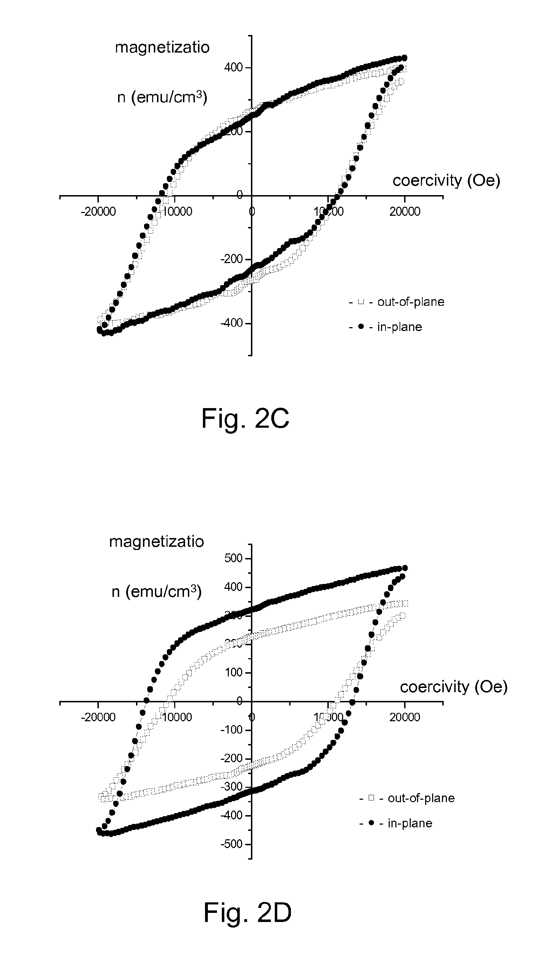

Please refer to Figs. 2A-2D, which show the hysteresis curves of the single-layered ferromagnetic recording films measured by the VSM of the present invention and the comparative examples after annealing. It can be found in Figs. 2A and 2B that the out-of-plane hysteresis curves are larger than the in-plane hysteresis curves when the film thicknesses of the FePt alloy films are decreased to 10 nm or below 10 nm. The FePt alloy films incline toward perpendicular magnetic anisotropy. Please refer to Fig. 2C, the out-of-plane hysteresis curve is similar to the in-plane hysteresis curve when the film thickness of the FePt alloy film is increased to 20 nm. The preferred orientation of the FePt alloy film is changed to a random orientation. Please refer to Fig. 2D, the in-plane hysteresis curve is larger than the out-of-plane hysteresis curve when the film thickness of the FePt alloy film is increased to 40 nm. The FePt alloy film inclines toward an in-plane magnetic anisotropy.

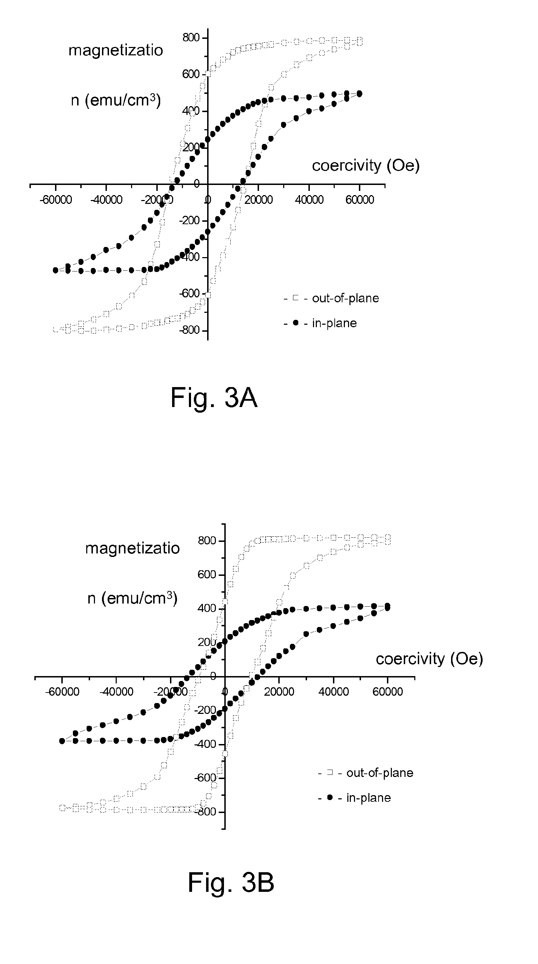

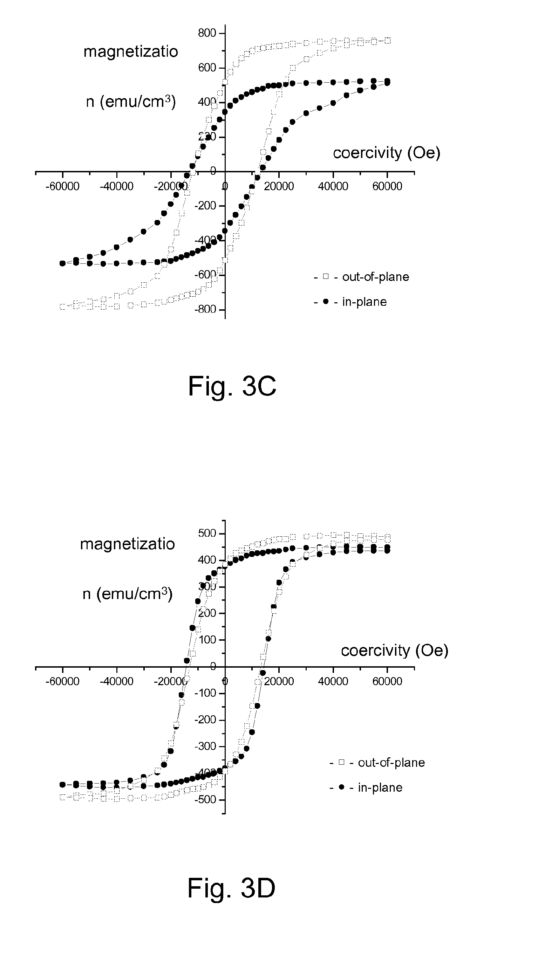

Since an applied magnetic field of the VSM is not enough to saturate the single-layered ferromagnetic recording films of the present invention and the comparative examples, the SQUID with a large applied magnetic filed of 60 kOe is used to obtain saturated hysteresis curves of the single-layered ferromagnetic recording films of the present invention and the comparative examples. Please refer to Figs. 3A-3D, which show the saturated hysteresis curves of the single-layered ferromagnetic recording films measured by SQUID of the present invention and the comparative examples after annealing. It can be found in Figs. 3A, 3B and 3C that the out-of-plane hysteresis curves are larger than the in-plane hysteresis curves when the film thicknesses of the FePt alloy films are 20 nm or below 20 nm. The FePt alloy films incline toward perpendicular magnetic anisotropy. Please refer to Fig. 3D, the out-of-plane hysteresis curve is similar to the in-plane hysteresis curve when the film thickness of the FePt alloy film is increased to 40 nm. The preferred orientation of the FePt alloy film inclines toward a random orientation.

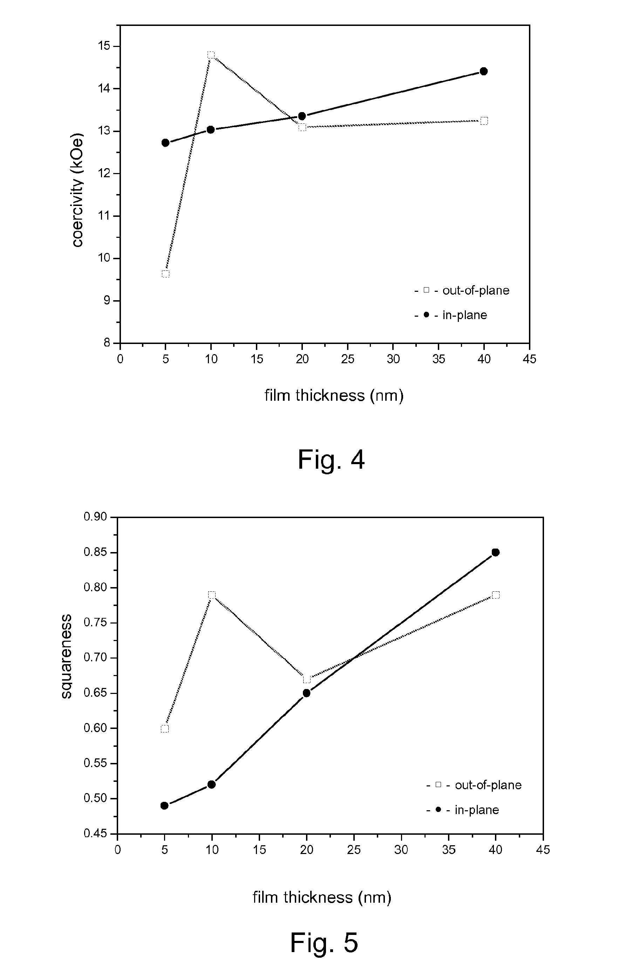

Please refer to Fig. 4, which shows the relationship between the coercivity and the film thickness of the FePt alloy films of the present invention and the comparative examples after annealing. According to Fig. 4, the out-of-plane and in-plane coercivities (Hc⊥ and Hc_{//}) of the FePt alloy films with film thickness of 40 nm are 13200 Oe and 14400 Oe, respectively. The Hc⊥ is close to Hc_{//} when the film thickness of the FePt alloy film is decreased to 20 nm. The Hc⊥ is increased to 14800 Oe and the Hc_{//} is decreased when the film thickness of the FePt alloy film is further decreased to 10 nm.

Please refer to Fig. 5, which shows the relationship between the squareness and the film thickness of the FePt alloy films of the present invention and the comparative examples after annealing. According to Fig. 5, the in-plane squareness (S_{//}) of the FePt alloy film is larger than the out-of-plane squareness (S⊥) when the film thickness of the FePt alloy film is 40 nm. The FePt alloy film inclines toward an in-plane magnetic anisotropy. The S_{//} is close to S⊥ when the film thickness of the FePt alloy film is decreased to 20 nm. The preferred orientation of the FePt alloy film is changed to a random orientation. The S⊥ is larger than S_{//} obviously when the film thickness of the FePt alloy film is decreased to 10 nm. The values of S⊥ and S_{//} are 0.80 and 0.52, respectively. The FePt alloy film inclines toward perpendicular magnetic anisotropy.

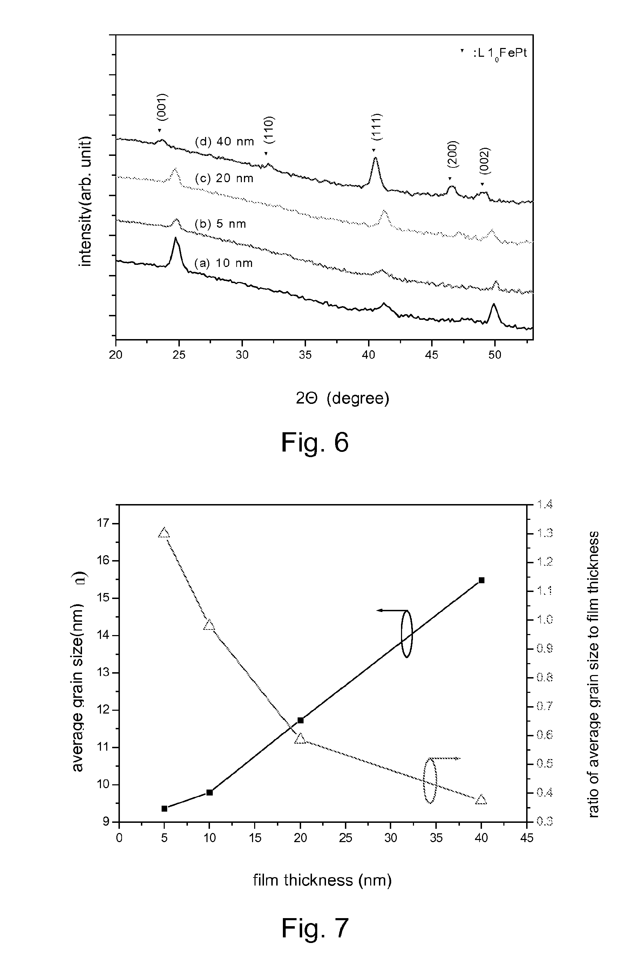

Please refer to Fig. 6, which shows the XRD patterns of the FePt alloy films of (a) the present invention and (b)-(d) the comparative examples after annealing. According to Fig. 6, the peak intensity of FePt(001) is almost similar with increasing the film thickness of the FePt alloy film over 20 nm. However, the peak intensities of FePt(111) and FePt(200) are increased with increasing the film thickness of the FePt alloy film. The magnetic easy axis of FePt is [001], therefore, when the film thickness of the FePt alloy film is thicker than 20 nm, the FePt alloy films with (111) preferred orientation will result in an in-plane magnetic anisotropy. Furthermore, the peak intensities of FePt(001) and FePt(002) are larger than FePt(111) when the film thickness of the FePt alloy film is decreased to 10 nm. The FePt alloy film inclines toward perpendicular magnetic anisotropy. This result is consistent with the saturated hysteresis curves of Figs. 3A-3D.

Please refer to Fig. 7, which shows the relationship between the average grain size, the ratio of the average grain size to the film thickness and the film thickness of the FePt alloy films of the present invention and the comparative examples after annealing. As shown in Fig. 7, the average grain size of the FePt alloy film is decreased with decreasing the film thickness of the FePt alloy film. On the other hand, the variation of the ratio of average grain size to the film thickness with the film thickness shows an inverse relationship. The ratio of the average grain size to the film thickness is increased with decreasing the film thickness of the FePt alloy film. The average grain size and the ratio of the average grain size to the film thickness of the FePt alloy film are 15.5 nm and 0.38, respectively when the film thickness of the FePt alloy film is 40 nm. The average grain size could be reduced to as small as 9.7 nm, and the ratio of the average grain size to the film thickness is enhanced to approach 1 when the film thickness of the FePt alloy film is decreased to 10 nm. The FePt alloy film inclines toward perpendicular magnetic anisotropy and reveals a prominent potent to be applied for the perpendicular magnetic recording media.

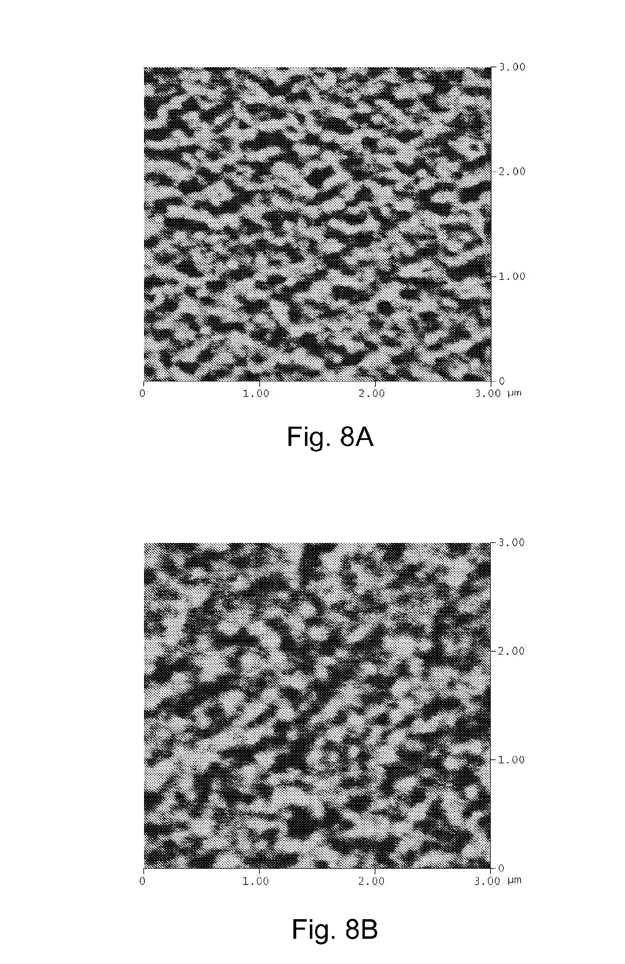

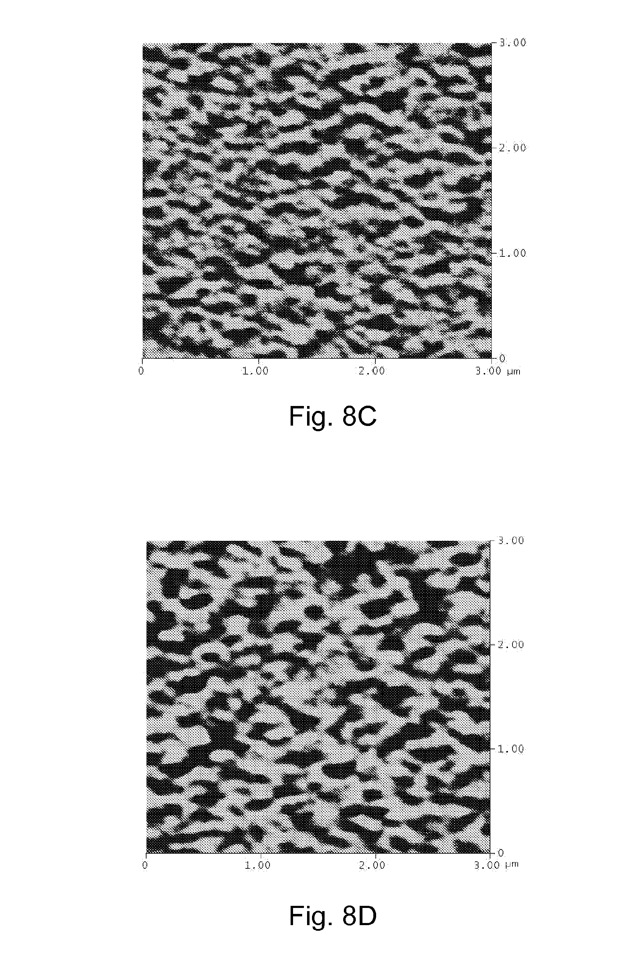

Please refer to Figs. 8A-8D, which show the MFM images of the FePt alloy films of the present invention and the comparative examples after annealing. As shown in Figs. 8A, 8B and 8C, the FePt alloy films with the film thicknesses of 10 nm, 5 nm and 20 nm would show the smaller and isolated FePt magnetic domains. Please refer to Fig. 8D, the FePt alloy film would show the larger and continuous FePt magnetic domains when the film thickness of the FePt alloy film is further increased to 40 nm. Therefore, the decrease in the film thickness of the FePt alloy film would be a great benefit to increase the recording density and reduce the media noise of the magnetic film.

According to the present invention, a single-layered FePt alloy film of 10 nm thick with perpendicular magnetic anisotropy could be achieved by a rapid thermal annealing process at a temperature of 700 °C for 180 seconds with a heating ramp rate of 100 °C/sec. The out-of-plane coercivity, saturation magnetization and out-of-plane squareness of the 10 nm FePt alloy film are larger than 6000 Oe, 450 emu/cm³ and 0.75, respectively. The average grain size of the 10 nm FePt alloy film is reduced significantly to 9.7 nm, and the ratio of the average grain size to the film thickness of the 10 nm FePt alloy film is enhanced to approach 1. Besides, the domain structure of the 10 nm FePt alloy film tends to isolated magnetic domains. Therefore, the 10 nm FePt alloy film would be a great benefit to increase the recording density and reduces the media noise of the magnetic film, which reveals the prominent potent to be applied for the perpendicular magnetic recording media.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A single-layered ferromagnetic recording film with perpendicular magnetic anisotropy, comprising:
a substrate; and
a ferromagnetic layer formed on the substrate;
wherein an average grain size of ferromagnetic layer is close to a film thickness of the ferromagnetic layer after performing a rapid thermal annealing process so as to obtain the single-layered ferromagnetic recording film with perpendicular magnetic anisotropy.

2. The single-layered ferromagnetic recording film as claimed in Claim 1, wherein the rapid thermal annealing process is performed for the ferromagnetic layer at a temperature of 700 °C for 180 seconds with a heating ramp rate of 100 °C/sec.

3. The single-layered ferromagnetic recording film as claimed in Claim 1, wherein the rapid thermal annealing process is performed under a protection gas of argon (Ar).

4. The single-layered ferromagnetic recording film as claimed in Claim 1, wherein the substrate is one of a glass substrate and a silicon substrate.

5. The single-layered ferromagnetic recording film as claimed in Claim 1, wherein the ferromagnetic layer is made of a Fe-based alloy.

6. The single-layered ferromagnetic recording film as claimed in Claim 5, wherein the Fe-based alloy is a FePt alloy.

7. The single-layered ferromagnetic recording film as claimed in Claim 1, wherein the ferromagnetic layer is formed on the substrate by a magnetron sputtering.

8. The single-layered ferromagnetic recording film as claimed in Claim 1, wherein the film thickness of the ferromagnetic layer is below 10 nm.

9. The single-layered ferromagnetic recording film as claimed in Claim 1, wherein an out-of-plane coercivity of the single-layered ferromagnetic recording film is larger than 6000 Oe.

10. The single-layered ferromagnetic recording film as claimed in Claim 1, wherein a saturation magnetization of the single-layered ferromagnetic recording film is larger than 450 emu/cm³.

11. The single-layered ferromagnetic recording film as claimed in Claim 1, wherein an out-of-plane squareness of the single-layered ferromagnetic recording film is larger than 0.75.

12. The single-layered ferromagnetic recording film as claimed in Claim 1, wherein the average grain size of the ferromagnetic layer is below 10 nm.

13. The single-layered ferromagnetic recording film as claimed in Claim 1, wherein a ratio of the average grain size to the film thickness of the ferromagnetic layer is close to 1.

14. The single-layered ferromagnetic recording film as claimed in Claim 1, wherein the single-layered ferromagnetic recording film has isolated magnetic domains with each other.
